# EUROPEAN PATENT SPECIFICATION

(11) **EP 3 911 854 B1**
(45) Date of publication and mention of the grant of the patent: **04.05.2022**
(21) Application number: 19805245.8
(22) Date of filing: 14.11.2019
(51) Int. Cl.: F03B 3/12

(54) **METHOD FOR PRODUCING A RADIAL FLOW RUNNER AND A RUNNER PRODUCED**
VERFAHREN ZUR HERSTELLUNG EINES RADIALSTRÖMUNGSLÄUFERS UND HERGESTELLTER LÄUFER
PROCÉDÉ DE PRODUCTION D'UN ROUE D'ÉCOULEMENT RADIAL ET ROUE AINSI PRODUIT

(30) Priority: 14.01.2019 US 201962792140 P
(43) Date of publication of application: 24.11.2021
(73) Proprietor: Voith Patent GmbH, 89522 Heidenheim (DE)
(72) Inventor: COULSON, Stuart, Seven Valleys, PA, 17360 (US); MCGINNIS, Daniel, Hanover, PA, 17331 (US); POLL, Hans, Dr., Beaconsfield (CA)
(74) Representative: Voith Patent GmbH - Patentabteilung
(86) International application number: PCT/EP2019/081310
(87) International publication number: WO 2020/147997

(56) References cited:
- EP-A2- 1 744 056
- CN-A- 105 332 846
- FR-A- 1 267 669
- JP-A- S55 123 374

## Description

The present invention relates generally to hydroelectric turbine and/or pump installations comprising a radial flow runner of the Francis type.

The conventional method for producing such a radial flow runner requires large weld volumes with high complexity due to the typical weld geometries. Such a runner is made up of three main component families: a plurality of blades (which have complex three dimensional profiles with an inlet edge and an outlet edge, and is bounded on one side by the crown and on the other side by the band), the crown which is designed to transfer the forces and moments generated by the blades to a shaft, and the band which attaches to all the blades adding rigidity to the structure and providing a boundary or shroud to the rotating water passage. The conventional method of assembly is to have pre-machined blades welded to the crown and the band with full penetration welds. This method results in weld joints that are variable in thickness and follow a path that is curved in three dimensions making them difficult to weld and requiring additional weld buildup and grinding at the weld junctions to ensure the weld fillet is large enough to avoid unacceptable stress concentrations and smooth enough to avoid flow disturbances that could be detrimental to the operation of the turbine. These welds are time consuming and expensive.

JP 2014-141903 A describes a different method wherein the crown and the band each comprise integral blade stubs. Subsequently portions of blades are welded to the stubs. This method avoids welding at the junction of the blades to band and crown where additional welding and grinding are needed to achieve the correct fillet geometry. Nevertheless, the amount of welding in three dimensions is still high and a huge part of the welding occurs in regions difficult to access.

SE 505 375 C2 describes another method wherein the runner is produced by assembling a plurality of runner segments, where each segment contains one blade integral with a corresponding portion of crown and band. The crown segments are intended to be joined together by welding, gluing, bolting, riveting or wedging. The band segments are intended to be held together by welding, gluing, bolting, riveting or wedging. Disadvantages of this method are related to the complexity of joinning the segments together. In embodiments where the segments are joined together in other ways than welding, the stresses in the joins may become a limiting factor for the design. The crown segments can be thick which makes them more expensive to weld together.

FR 1 267 669 A describes another method, wherein the runner is produced by assembling the crown and a plurality of other components, wherein each other component comprises a blade and a portion of the band, and wherein the crown comprises slots for receiving the blades.

The objective of the present invention is to provide a method for producing a radial flow runner with reduced amount of complex welding and therefore saving of costs.

This objective is achieved by a method according to claim 1 and by a runner according to the independent device claim. Other favorable implementations of the invention are disclosed in the depended claims.

The invention will hereinafter be described in conjunction with the appended drawings:
Fig. 1 is a view of a portion of a runner according to the present invention;
Fig. 2 is another view of a portion of a runner according to the present invention;
Fig. 3 shows three different views of another portion of a runner according to the present invention;
Fig. 4 is a view of a runner according to the present invention;
Fig. 5 shows the steps of the method according to the present invention.

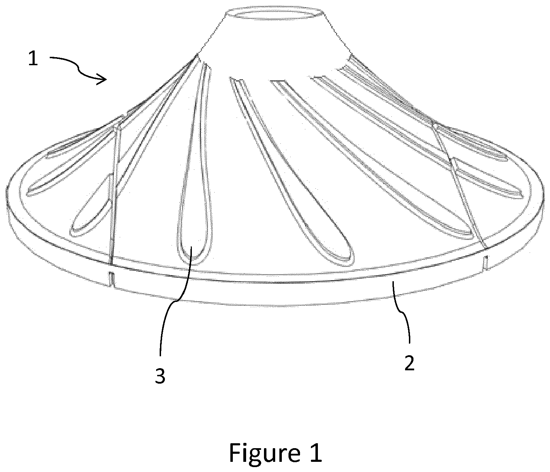

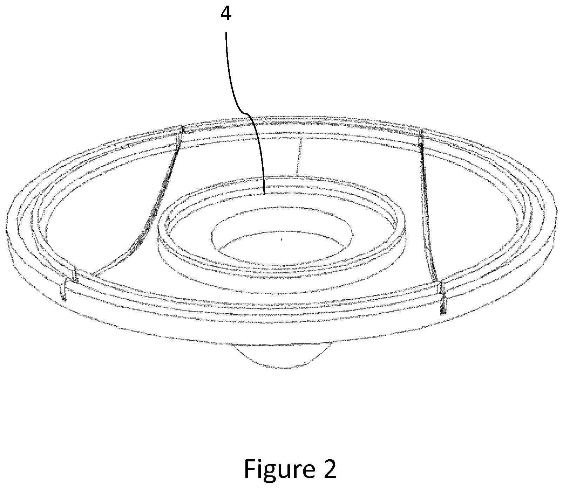

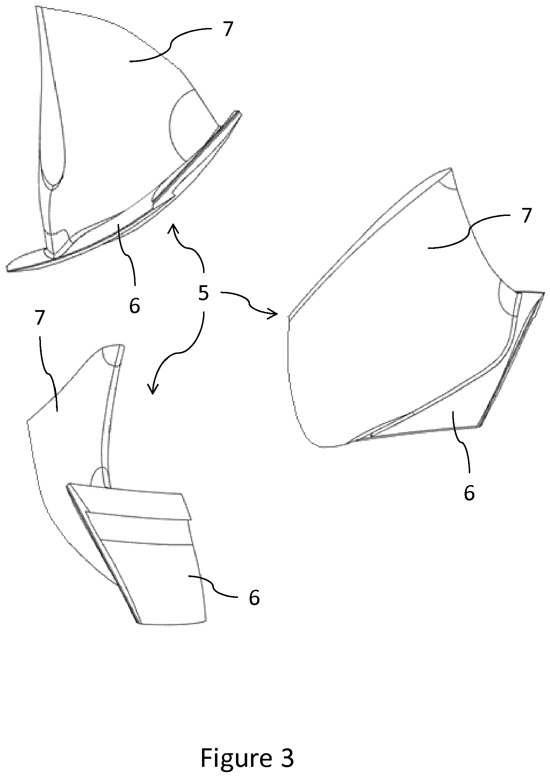

The runner is made up according to the present invention of two main sets of components, whereof the first is shown in figures 1 and 2 and the second is shown in figure 3.

Figure 1 shows the first main component of a radial flow runner according to the present invention in a first view. The first main component is designated by 1 and comprises the crown, which is designated as 2, and a portion of each blade, whereof one is designated as 3.

Figure 2 shows the first main component of a radial flow runner according to the present invention in a second view. The first main component is designated again by 1 and comprises a flange, which is designated as 4. It is also possible that the first main component comprises no flange. In this case, the flange can be added to the runner at any point of time during the production process or after the production process.

For larger runners the first main component 1 will be also of huge size. Due to weight and size restrictions for the shipment, the first main component 1 may be provided in at least two smaller parts. Figure 1 and figure 2 are showing a possible division of the first main component 1, which consists of a first part comprising the central part of the crown 2 and the flange 4, and two other parts comprising each a lateral part of the crown 2. Optionally also the flange 4 can be provided as a separate part of the first main component 1. Of course, other divisions of the first main component 1 are possible, for example splitting it off into segments. The parts of the first main component 1 are joined together preferably by welding. Alternatively, the parts of the first main component 1 could be held together by some combination of bolting, welding, gluing or wedging. The division shown in figures 1 and 2 has the advantage that joints are straight and in a region where the thickness of the parts is comparatively small, which makes welding together of the parts much easier.

Figure 3 shows the second main component of a radial flow runner according to the present invention in three different views. The second main component is designated by 5 and comprises a portion of the band, which is designated as 6, and a portion of one single blade, which is designated as 7.

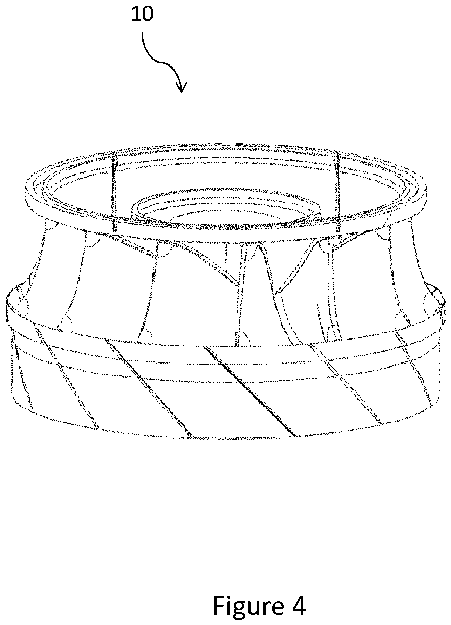

Figure 4 shows a view of a runner according to the present invention. The runner is designated as 10. The runner 10 is assembled by joining one first main component and a plurality of second main components. It is clear that in this way each blade of the runner 10 is composed of the portion, which is part of the first main component, and the portion, which is part of a second main component. It is also clear that the band of the runner is composed of the portions, which are part of the plurality of the second main components. In other words, each second main component comprises a portion (6) of the band and the remaining portion (7) of a blade, meaning the portion of the blade, which is not part of the fist main component (1).

It is of advantage if the joints between the first main component 1 and the second main components 5 are located in a lower stress area of the blades, which is just beyond the filleted area between blade and crown. Longer distances from the crown surface are also possible locations for the said joints but having the joint on the blade stub portion just outside the fillet area at crown provides the benefits of simplifying the weld geometry, welding in a lower stress region and keeping the costs of the fist main component 1 reasonable.

The joints between the adjacent second main components 5 are located between the blades of the assembled runner 10. It is of advantage if these joints are located away from the filleted area between blades an band to ensure that the joints are in a lower stress region. It is also of advantage if the joints follow a straight line or a series of straight lines.

It is of advantage if all second main components 5 are of identical design, since this makes the production of these parts cheaper. It is also possible that the design of the second main components 5 is different; for example, one of the second main components 5 comprises a blade comprising a gas passage, whereas the other blades do not comprise such a passage. Alternatively, it could be, that the lengths of the blades are different (so-called splitter blade design).

The second main components 5 are preferably manufactured by casting.

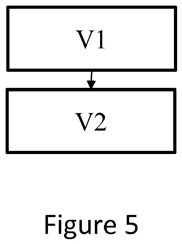

Figure 5 shows the steps of the method according to the present invention. The method comprises a step, which is designated by V1 and a step, which is designated by V2.

Step V1 comprises the activity of providing a first main component 1. The fist main component can be provided as a single part or split into several distinct parts. Step V1 comprises the activity of providing a plurality of second main components 5.

Step V2 comprises the activity of joining the second main components 5 to the first main component 1 and of joining the adjacent second main components 5 to each other to build up the runner. It is clear, that the joins are performed by joining portions 7 of the blades, which are part of the second main components 5, and portions 3 of the blades, which are part of the first main component 1, and by joining portions 6 of the band, which are part of adjacent second main components 5. In the case, that the first main component 1 has been provided in step V1 split into several distinct parts, the step V2 comprises additionally the activity of joining these distinct parts to obtain the first main component 1.

There are several possibilities to perform step V2. In a first way, the second main components 5 are first sequentially joined to the first main component 1 by welding and afterwards the adjacent second main components 5 are joined to each other. The advantage of this embodiment is that almost all the joints of the welds between the first and the second main components are easily accessible. In a second way, all the joins of step V2 are first done in a preliminary manner, for example by spot welding, and afterwards in the final manner. The advantage of this embodiment is that the position and orientation of the components to each other can easily be controlled and corrected if necessary. In all possibilities, an auxiliary device is useful to position the components in relation to each other before the joins are finally performed.

All the joins in step 2 are preferably performed by welding, whereas the joins between the adjacent second main components 5 could also be done by some combination of bolting, welding, gluing or wedging. The weld joints make preferably use of narrow gap welding processes.

The method can be performed completely in factory, which allows for the best control of the process, or for huge runners partially on site to overcome the problem of transportation of the entire runner since only the single components have to be shipped. This means that step V2 is performed on site. It is also possible to perform step V2 of the method partially in factory and partially on site. In this case, only a portion of the second main components 5 is joined to the first main component 1 in factory and the remaining second main components 5 are joined to the first main component 1 on site. In the case, that the first main component 1 has been provided in step V1 split into several distinct parts, some of the second main components 5 may be joined to one of the distinct parts of the first main component 1 in factory and the rest of the joining work is done on site.

In conclusion, the present invention results in reduced weld volumes and simpler weld geometries such that more efficient automatic or semi-automatic welding processes can be applied. The method avoids welding at the junction of the blades to band and crown where additional welding and grinding are needed to achieve the correct fillet geometry. Large portions of the welds can be straight and at close to constant thickness, such that narrow gap welding techniques can be applied. Narrow gap welding substantially reduces the required weld volume. Compared to conventional welding techniques, the narrow gap welding process is faster and makes it easier to control distortion during welding. The welds are also located in low stress regions, which can permit in some cases the use of partial penetration or partial thickness welds rather than the typically required full penetration welds.

## Claims

1. A method for producing a radial flow runner for a hydroelectric turbine and/or pump installation, wherein the runner comprises a crown (2), a band and a plurality of blades, wherein the method comprises a first step (V1) and a second step (V2), wherein the first step (V1) comprises the activity of providing a first main component (1), which comprises the crown (2) and a portion (3) of each blade, wherein each of those portions (3) comprises a blade stub portion and a fillet area, and of providing a plurality of second main components (5), wherein each second main component (5) comprises a portion (6) of the band and a portion (7) of one single blade, wherein the second step (V2) comprises the activity of joining the second main components (5) to the first main component (1) and of joining adjacent second main components (5) to each other to build up the runner, wherein the joins of the second step (V2) are performed by joining portions (7) of the blades, which are part of the second main components (5), and portions (3) of the blades, which are part of the first main component (1), and by joining portions (6) of the band, which are part of adjacent second main components (5).

2. The method of claim 1, wherein the first step (V1) comprises the activity of providing at least two distinct parts of the first main component (1) and the second step (V2) comprises the activity of joining these distinct parts to obtain the first main component (1).

3. The method of claim 2, wherein the first main component (1) consists of a first part comprising the central part of the crown (2) and two other parts comprising each a lateral part of the crown (2).

4. The method of one of the preceding claims, wherein the joins are performed by welding.

5. The method of one of the preceding claims, wherein the joins are performed by narrow gap welding.

6. The method of one of the claims 4 or 5, wherein at least one weld join is a partial thickness weld.

7. The method of one of the preceding claims, wherein the joints between adjacent second main components (5) are following a straight line or a series of straight lines.

8. The method of one of the preceding claims, wherein the joints between adjacent second main components (5) are located away from the filleted area between blades an band.

9. The method of one of the preceding claims, wherein the joints between the first main component (1) and the second main components (5) are just beyond the filleted area between blade and crown (2).

10. The method of one of the preceding claims, wherein all second main components (5) are of identical design.

11. The method of one of the preceding claims, wherein the second main components (5) are manufactured by casting.

12. The method of one of the preceding claims, wherein the runner comprises a flange (4) and the first main component (1) comprises the flange (4).

13. The method of claim 12 in combination with claim 3, wherein the first part of the first main component (1) comprises the flange (4).

14. The method of claim 12 in combination with claim 3, wherein the first main component (1) consists additionally of a fourth part and the fourth part is the flange (4).

15. A runner for a hydroelectric turbine and/or pump installation produced according to one of the preceding claims.

## Patentansprüche

1. Verfahren zur Herstellung eines Radiallaufrades für eine hydroelektrische Turbinen- und/oder Pumpenanlage, wobei das Laufrad einen Kranz (2), ein Band und eine Vielzahl von Schaufeln umfasst, wobei das Verfahren einen ersten Schritt (V1) und einen zweiten Schritt (V2) umfasst, wobei der erste Schritt (V1) die Tätigkeit des Bereitstellens einer ersten Hauptkomponente (1) umfasst, die den Kranz (2) und einen Abschnitt (3) jeder Schaufel umfasst, wobei jeder dieser Abschnitte (3) einen Schaufelstummelabschnitt und einen Ausrundungsbereich umfasst, und des Bereitstellens einer Vielzahl von zweiten Hauptkomponenten (5), wobei jede zweite Hauptkomponente (5) einen Abschnitt (6) des Bandes und einen Abschnitt (7) einer einzelnen Klinge umfasst, wobei der zweite Schritt (V2) die Aktivität des Verbindens der zweiten Hauptkomponenten (5) mit der ersten Hauptkomponente (1) und des Verbindens benachbarter zweiter Hauptkomponenten (5) miteinander umfasst, um den Läufer aufzubauen, wobei die Verbindungen des zweiten Schritts (V2) durch Verbinden von Abschnitten (7) der Schaufeln, die Teil der zweiten Hauptkomponenten (5) sind, und Abschnitten (3) der Schaufeln, die Teil der ersten Hauptkomponente (1) sind, und durch Verbinden von Abschnitten (6) des Bandes, die Teil benachbarter zweiter Hauptkomponenten (5) sind, durchgeführt werden.

2. Verfahren nach Anspruch 1, wobei der erste Schritt (V1) die Tätigkeit des Bereitstellens von mindestens zwei verschiedenen Teilen des ersten Hauptbauteils (1) umfasst und der zweite Schritt (V2) die Tätigkeit des Zusammenfügens dieser verschiedenen Teile umfasst, um das erste Hauptbauteil (1) zu erhalten.

3. Verfahren nach Anspruch 2, wobei die erste Hauptkomponente (1) aus einem ersten Teil, der den zentralen Teil der Krone (2) umfasst, und zwei weiteren Teilen besteht, die jeweils einen seitlichen Teil der Krone (2) umfassen.

4. Verfahren nach einem der vorhergehenden Ansprüche, wobei die Verbindungen durch Schweißen hergestellt werden.

5. Verfahren nach einem der vorhergehenden Ansprüche, wobei die Verbindungen durch Engspaltschweißen hergestellt werden.

6. Verfahren nach einem der Ansprüche 4 oder 5, wobei mindestens eine Schweißverbindung eine Teilschweißung ist.

7. Verfahren nach einem der vorhergehenden Ansprüche, wobei die Verbindungen zwischen benachbarten zweiten Hauptkomponenten (5) einer geraden Linie oder einer Reihe von geraden Linien folgen.

8. Verfahren nach einem der vorhergehenden Ansprüche, bei dem die Verbindungsstellen zwischen benachbarten zweiten Hauptkomponenten (5) außerhalb des Hohlkehlen-Bereichs zwischen Schaufel und Band angeordnet sind.

9. Verfahren nach einem der vorhergehenden Ansprüche, bei dem die Verbindungsstellen zwischen dem ersten Hauptbauteil (1) und den zweiten Hauptbauteilen (5) unmittelbar hinter dem Hohlkehlen-Bereich zwischen Schaufel und Krone (2) liegen.

10. Verfahren nach einem der vorhergehenden Ansprüche, wobei alle zweiten Hauptkomponenten (5) gleich aufgebaut sind.

11. Verfahren nach einem der vorhergehenden Ansprüche, wobei die zweiten Hauptkomponenten (5) durch Gießen hergestellt werden.

12. Verfahren nach einem der vorhergehenden Ansprüche, wobei der Läufer einen Flansch (4) aufweist und das erste Hauptbauteil (1) den Flansch (4) aufweist.

13. Verfahren nach Anspruch 12 in Verbindung mit Anspruch 3, wobei der erste Teil des ersten Hauptbauteils (1) den Flansch (4) umfasst.

14. Verfahren nach Anspruch 12 in Verbindung mit Anspruch 3, wobei das erste Hauptbauteil (1) zusätzlich aus einem vierten Teil besteht und das vierte Teil der Flansch (4) ist.

15. Laufrad für eine hydroelektrische Turbinen- und/oder Pumpenanlage, hergestellt nach einem der vorhergehenden Ansprüche.

## Revendications

1. Procédé de production d'une roue à écoulement radial pour une installation de turbine et/ou de pompe hydroélectrique, dans lequel la roue comprend une couronne (2), une bande et une pluralité de pales, dans lequel le procédé comprend une première étape (V1) et une seconde étape (V2), dans lequel la première étape (V1) comprend l'activité consistant à fournir un premier composant principal (1), qui comprend la couronne (2) et une partie (3) de chaque pale, dans lequel chacune de ces parties (3) comprend une partie de talon de pale et une zone de congé, et à fournir une pluralité de seconds composants principaux (5), dans lequel chaque deuxième composant principal (5) comprend une partie (6) de la bande et une partie (7) d'une seule lame, dans lequel la deuxième étape (V2) comprend l'activité consistant à joindre les deuxièmes composants principaux (5) au premier composant principal (1) et à joindre les deuxièmes composants principaux adjacents (5) les uns aux autres pour construire le patin, dans lequel les jonctions de la seconde étape (V2) sont réalisées en joignant des parties (7) des lames, qui font partie des seconds composants principaux (5), et des parties (3) des lames, qui font partie du premier composant principal (1), et en joignant des parties (6) de la bande, qui font partie des seconds composants principaux adjacents (5).

2. Procédé selon la revendication 1, dans lequel la première étape (V1) comprend l'activité consistant à fournir au moins deux parties distinctes du premier composant principal (1) et la seconde étape (V2) comprend l'activité consistant à joindre ces parties distinctes pour obtenir le premier composant principal (1).

3. Procédé de la revendication 2, dans lequel le premier composant principal (1) consiste en une première partie comprenant la partie centrale de la couronne (2) et deux autres parties comprenant chacune une partie latérale de la couronne (2).

4. Procédé de l'une des revendications précédentes, dans lequel les assemblages sont réalisés par soudage.

5. Procédé de l'une des revendications précédentes, dans lequel les jonctions sont réalisées par soudage à intervalle étroit.

6. Procédé de l'une des revendications 4 ou 5, dans lequel au moins un joint de soudure est une soudure d'épaisseur partielle.

7. Procédé de l'une des revendications précédentes, dans lequel les joints entre les seconds composants principaux adjacents (5) suivent une ligne droite ou une série de lignes droites.

8. Procédé de l'une des revendications précédentes, dans lequel les joints entre les seconds composants principaux adjacents (5) sont situés loin de la zone de filetage entre les lames et la bande.

9. Procédé de l'une des revendications précédentes, dans lequel les joints entre le premier composant principal (1) et les seconds composants principaux (5) sont juste au-delà de la zone en filet entre la lame et la couronne (2).

10. Procédé de l'une des revendications précédentes, dans lequel tous les seconds composants principaux (5) sont de conception identique.

11. Procédé de l'une des revendications précédentes, dans lequel les seconds composants principaux (5) sont fabriqués par moulage.

12. Procédé de l'une des revendications précédentes, dans lequel le patin comprend une bride (4) et le premier composant principal (1) comprend la bride (4).

13. Procédé de la revendication 12 en combinaison avec la revendication 3, dans lequel la première partie du premier composant principal (1) comprend la bride (4).

14. Procédé de la revendication 12 en combinaison avec la revendication 3, dans lequel le premier composant principal (1) consiste en outre en une quatrième partie et la quatrième partie est la bride (4).

15. Roue pour une installation de turbine et/ou de pompe hydroélectrique réalisée selon l'une des revendications précédentes.
